# EUROPEAN PATENT SPECIFICATION

(11) **EP 2 277 367 B1**
(45) Date of publication and mention of the grant of the patent: **14.03.2012**
(21) Application number: 10168124.5
(22) Date of filing: 01.07.2010
(51) Int. Cl.: A01B 59/06, A01D 34/66

(54) **Improved front mower group for tractors**
Verbessertes Frontmähwerk für Traktoren
Faucheuse frontale améliorée pour tracteurs

(30) Priority: 21.07.2009 IT MI20091289
(43) Date of publication of application: 26.01.2011
(73) Proprietor: BCS S.p.A., 20123 Milano (MI) (IT)
(72) Inventor: Castoldi, Fabrizio, 20145, Milano MI (IT)
(74) Representative: Cosenza, Simona

(56) References cited:
- DE-A1- 4 007 735
- DE-U1- 9 405 773

## Description

The present invention refers to an improved front mower group for tractors.

In particular the present invention refers to a mower group of the type comprising a mowing bar connected in a rigid manner below a support frame, and an upper sustaining frame of the support frame connectable to a three-point coupling of the relative tractor.

It is today common for disk mowers arranged at the front of the tractor in some farming conditions or depending on the stage of growth of the forage, to raise fine dust and small particles of product which are quite volatile during operation.

In particular, this fine dust, which is generated in the front part of the machines when the top parts of the forage stems strike the front protection, remains in suspension above the mower and, due to the forward motion of the machine, it comes into contact with the air intake vents arranged on the bonnet of the tractor.

Disadvantageously, in such a way, after a certain operating time period, these intake vents gradually get clogged up forcing the worker to stop and clean them.

Such a drawback is further present in modern tractors in which there are often many devices that require cooling and thus require a great amount of air necessary to pass through the radiators.

The conveying of particles in suspension above the mower towards the intake vents of the motorisation of the tractor is also worsened by the sucking of air generated by the vents themselves which causes a strong drawing effect of the surrounding fine dust.

As can easily be deduced, the blocking, even partial, of the intake vents of the motorisation of the tractor considerably limits the performance of the tractor itself, forcing users today, as mentioned above, to often have to stop work so as to free the aforementioned vents from the particles located on top of them.

The purpose of the present invention is that of making an improved front mower group for tractors able to solve the aforementioned drawbacks of the prior art in an extremely simple, cost-effective and particularly functional manner. Another purpose is that of making an improved front mower group for tractors in which the air intake vents arranged on the bonnet of the tractor are protected from volatile particles that are generated in suspension above the mower during the forward motion during use of the tractor so as to keep such vents always free and efficient not forcing the worker to ever have to stop to clean them.

These purposes according to the present invention are achieved by making an improved front mower group for tractors as outlined in claim 1.

Further characteristics of the invention are highlighted in the subsequent claims.

The characteristics and the advantages of an improved front mower group for tractors according to the present invention shall become clearer from the following description, given as an example and not for limiting purposes, with reference to the attached schematic drawings, in which:
- figure 1 is a schematic side view of an example embodiment of an improved front mower group for tractors according to the present invention;
- figure 2 is a front view of the improved front mower group for tractors of figure 1;
- figure 2A is a front view of a second improved front mower group for tractors according to the present invention;
- figure 2B is a top view of a third improved front mower group for tractors according to the present invention;
- figure 3 is a top view of the improved front mower group for tractors of figure 1;
- figure 4 is a front perspective view of the improved front mower group for tractors of figure 1;
- figure 5 is a rear perspective view of the improved front mower group for tractors of figure 1;
- figure 5A is a rear perspective view of the improved front mower group for tractors of figure 2A;
- figure 5B is a front perspective view of the improved front mower group for tractors of figure 2B;
- figure 6 shows an enlarged detail of the improved front mower group for tractors of figure 4;
- figure 7 shows an enlarged detail of the improved front mower group for tractors of figure 5;
- figure 8 shows a schematic front perspective view of a preferred embodiment of the improved front mower group for tractors according to the present invention; and
- figure 9 shows a section view of the improved front mower group for tractors of figure 8.

With reference to the figures, an improved front mower group for tractors according to the present invention is wholly indicated with reference numeral 10.

Such a mower group 10 is of the type connectable to the front of a tractor 15 from which it draws power at a power drive 16.

By the adjective "front" we do not necessarily mean that the mower group 10 can exclusively be constrained on one side of the tractor 15 but that, in any case, it must be arranged along the direction in which the machine moves.

In other words, if the tractor 15 is driving forwards, the mower group 10 is indeed arranged at the front; alternatively, if the tractor 15 is used in reverse, the mower group 10 can also be temporarily constrained at the rear part of the tractor 15.

Generally, in such a last case, the tractor 15 also comprises a rotatable driving cabin.

As can be seen in the figures, the aforementioned mower group 10 comprises a support frame 11 and a mowing bar 12 connected below the support frame 11, generally in a rigid manner.

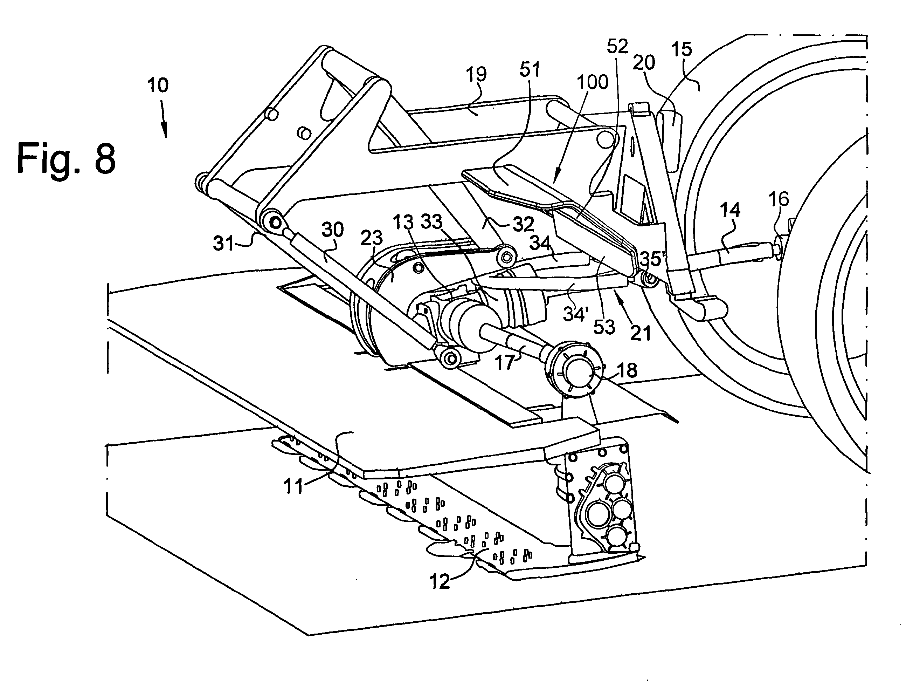

In order to transmit the motion to the bar 12, as shown for example in figure 8, it can be foreseen for there to be an angle transmission 13 of the motion coming from a cardan shaft 14 connected to said power drive 16 of the tractor 15.

In such a case connected laterally with respect to the angle transmission 13 there is a transverse shaft 17, which is about half the length of the mowing bar 12, said shaft 17 ending at a lateral transmission 18 connected to the mowing bar 12.

Above the support frame 11 there is an upper frame 19 the rear of which is shaped so as to be connected to a three-point attachment 20 of the tractor 15.

Once mounted, the upper frame 19 is integrally joined to the tractor 15.

According to the invention, the mower group 10 also comprises means 100 for intercepting and conveying the fine dust present in suspension above the support frame 11 and generated during the use of the mower 12.

By the term "fine dust" we mean all those volatile particles which are generated during forward motion of the tractor 15 in use, when the top portions of the forage stems strike the front protection of the mower 12.

In particular such means 100 for intercepting and conveying are arranged laterally with respect to the upper frame 19 in an intermediate position between the tractor 15 and the support frame 11 so as to create a protective barrier for the suction mouths 60 of the motorisation arranged at the front end of the tractor 15.

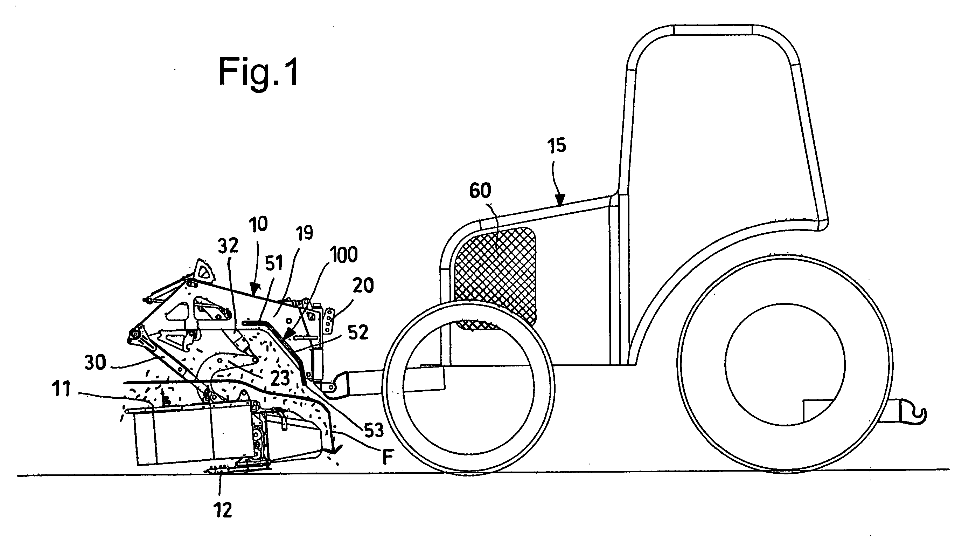

As can be seen in figure 1 such means 100 for intercepting and conveying do not allow the volatile particles present above the mower 12 to reach the suction mouths 60 of the motorisation directing such fine dust downwards to the ground and/or the support frame 11.

Therefore, according to what has been mentioned above, the means 100 for intercepting and conveying of the present invention prevents the aforementioned fine dust of volatile particles from coming into contact with the air suction vents 60 arranged on the bonnet of the tractor 15.

According to a preferred embodiment, visible in the figures 1-5, the means 100 for intercepting and conveying the fine dust comprise two baffle plates 100 shaped in a manner such as to intercept and convey downwards the fine dust present in suspension above the support frame 11 and generated during the use of the mower 12.

In the figures, such baffle plates 100 are shaped, for example, as thin profiles.

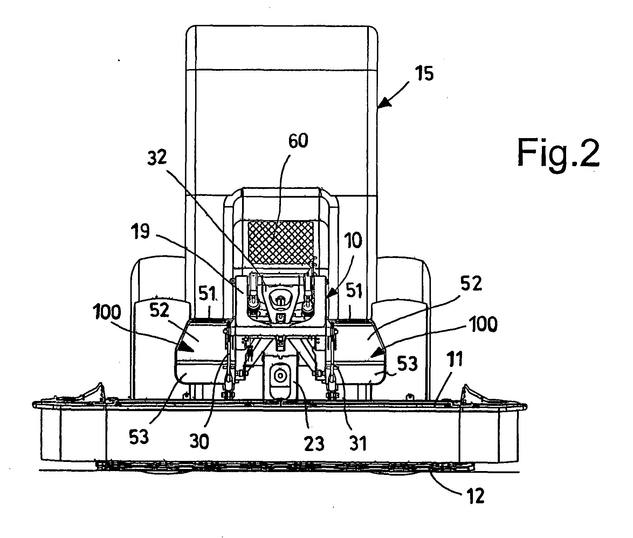

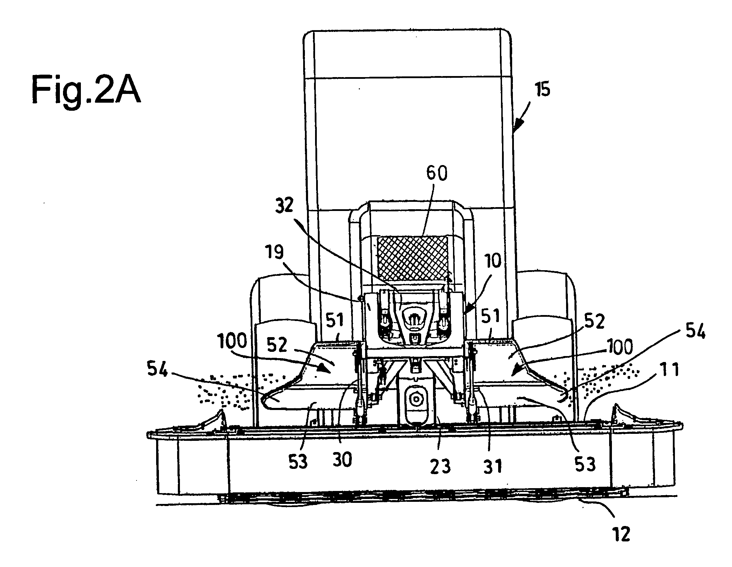

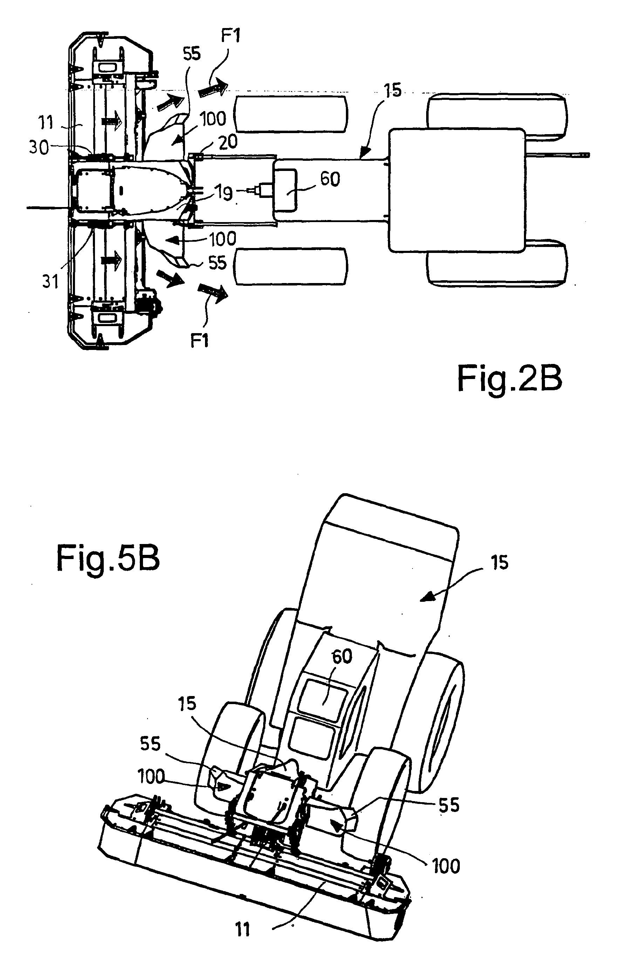

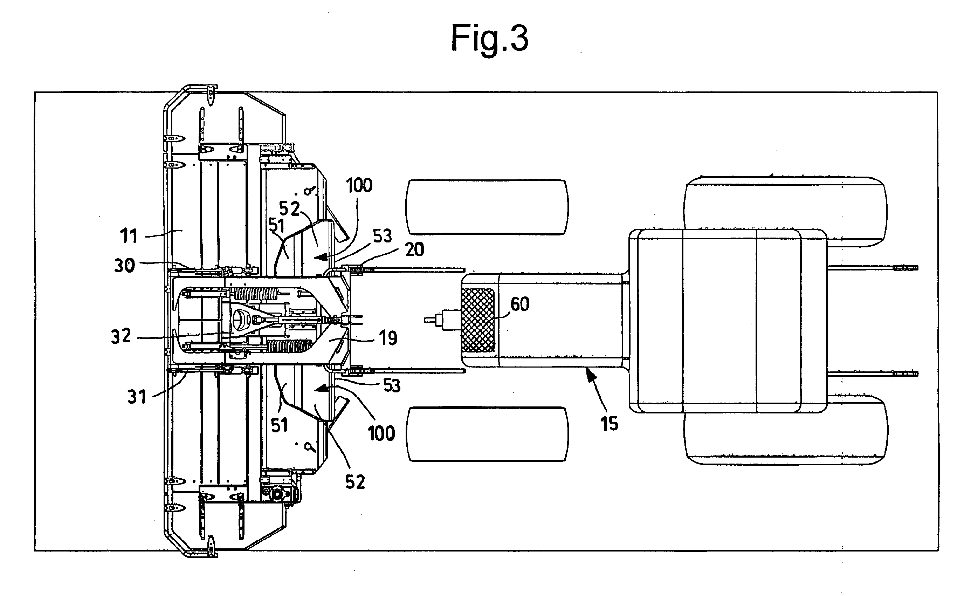

Such baffle plates 100 can be either formed as a single piece with the upper frame 19 or constrained to the latter in a moveable manner for example through pins or guides. For example a particular profile suitable for intercepting and conveying downwards the fine dust present in suspension above the support frame 11 is shown in figure 1, in which the forced path of the volatile particles is indicated with F. The lateral bulk of the baffle plates 100 is visible in figures 2 and 3 in which generally such baffle plates 100 extend laterally from the frame 19 up to about the front wheels of the tractor 15.

Preferably, as visible in figure 3, moreover, the outer profile 60 of the aforementioned baffle plates 100 is not straight but rounded so as not to in any way block the view of the driver of the tractor 15.

Referring to the materials used, the baffle plates 100 can be made from any material both metal or plastic and/or they can foresee a metallic structure with plastic portions possibly also transparent and/or that can be replaced in the case in which they break.

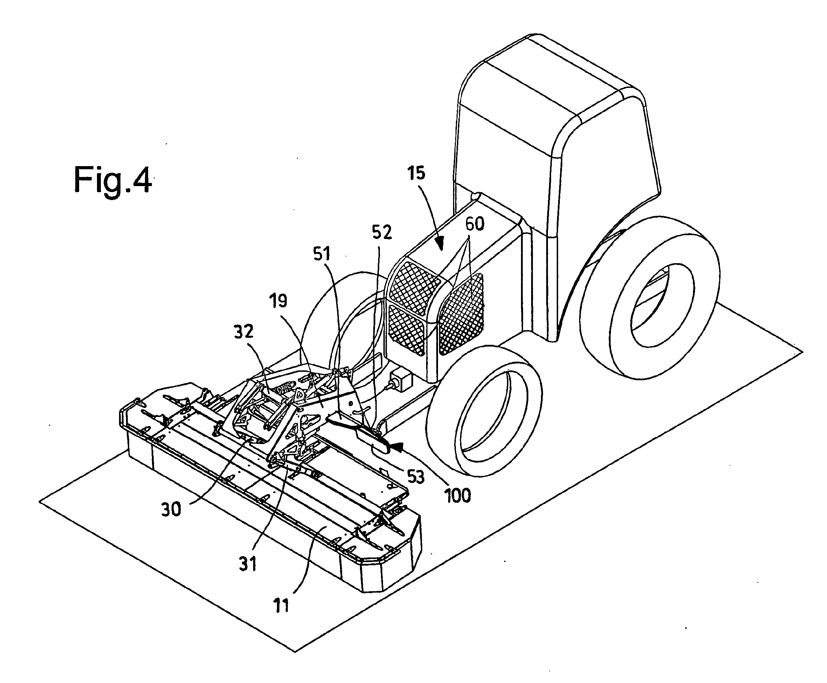

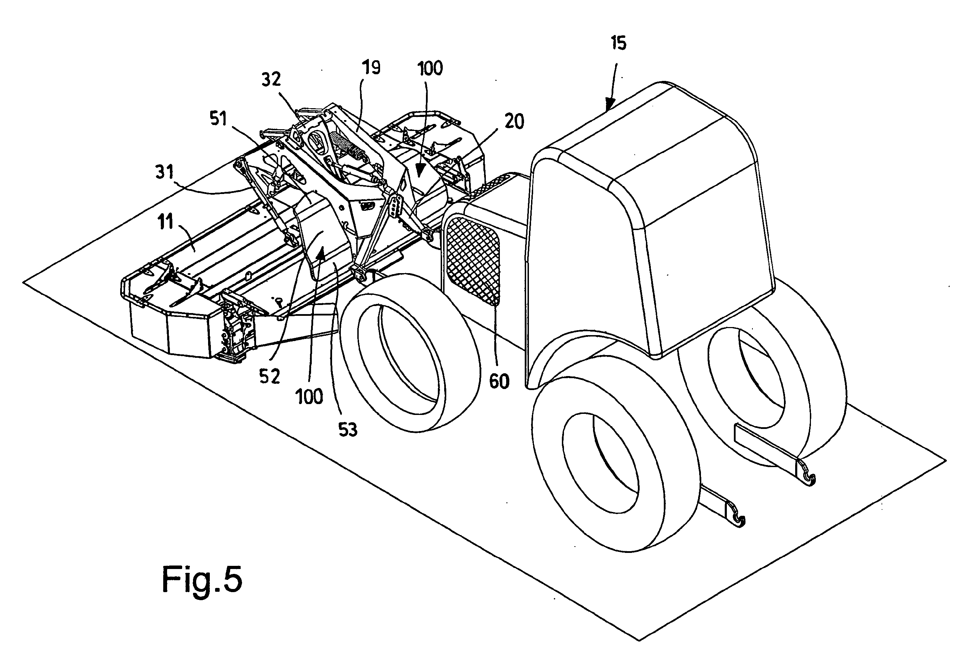

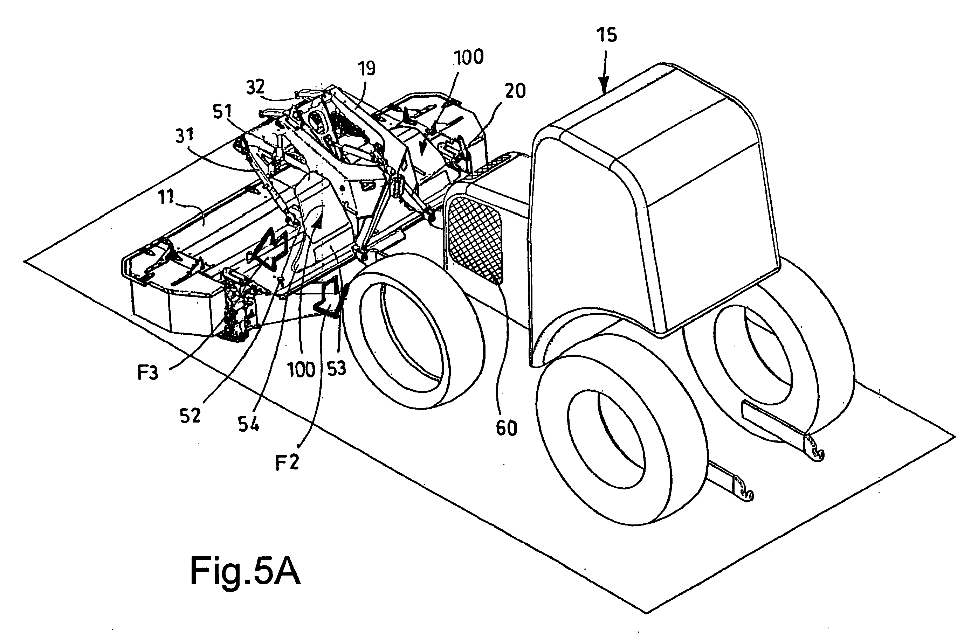

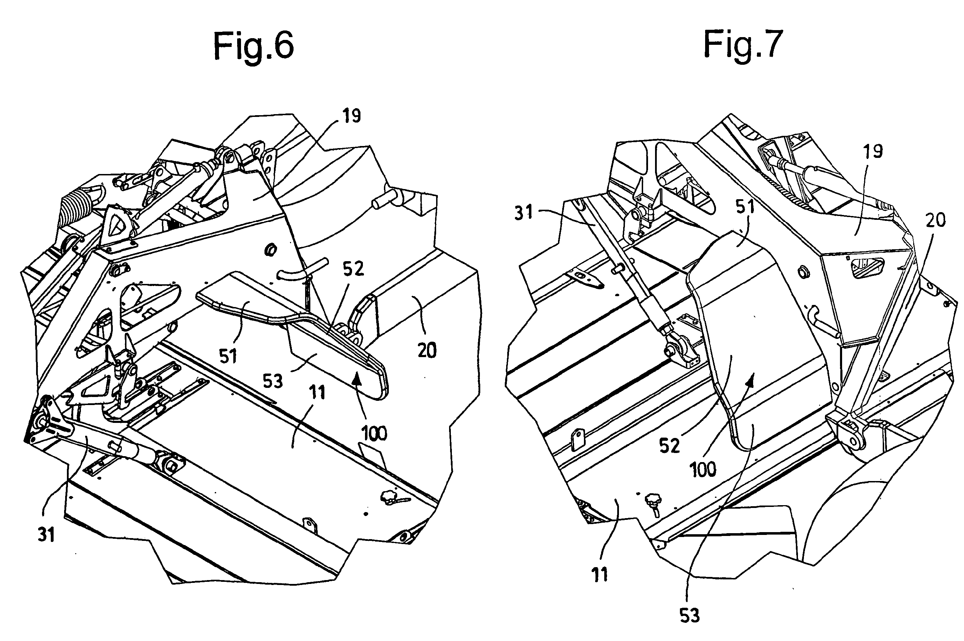

As visible in the perspective figures 4 and 5 as well as in the enlarged details of figures 6 and 7, the baffle plates 100 comprise an upper portion 51 substantially horizontal and parallel to the support frame 11, a lower portion 53 substantially vertical and orthogonal to the support frame 11 and an intermediate connection portion 52 between the upper and lower portions 51, 53.

According to different example embodiments, the portions 51, 52, 53 of the baffle plates 100, to which also other portions can be associated and oriented in different directions, can be a single piece with one another or constrained to one another in a moveable manner for example through horizontal pins.

Figures 2B and 5B and figures 2A and 5A show two different example embodiments of the present invention, wherein the baffle plates are shaped in a manner such as to convey substantially laterally and both laterally and downwards, respectively, the fine dust present in suspension above the support frame 11 generated during the use of the mower 12.

Figure 2A clearly shows the lower terminal portions 54, shaped in a manner such to convey also laterally the abovementioned fine dust, whereas figure 5b shows side terminal portions 55 shaped in a manner such as to convey substantially laterally the fine dust.

Similarly to what has been described so far, even in such embodiments, the means 100 for intercepting and conveying are arranged laterally with respect to the upper frame 19 in an intermediate position between the tractor 15 and the support frame 11 so as to create a protective barrier for the suction mouths 60 of the motorisation arranged at the front end of the tractor 15.

Therefore, even such means 100 for intercepting and conveying advantageously do not allow the volatile particles present above the mower 12 to reach the suction mouths 60 of the motorisation and come into contact with the air suction vents 60 arranged on the bonnet of the tractor 15.

As mentioned at the beginning of the description between the upper frame 19 integrally joined to the tractor 15 and the support frame 11 which supports the mowing bar, moveable connection means 30, 31, 32 are foreseen in a way such as to allow particular movements of the mowing bar 12 with respect to the upper frame 19 and therefore to the tractor 15.

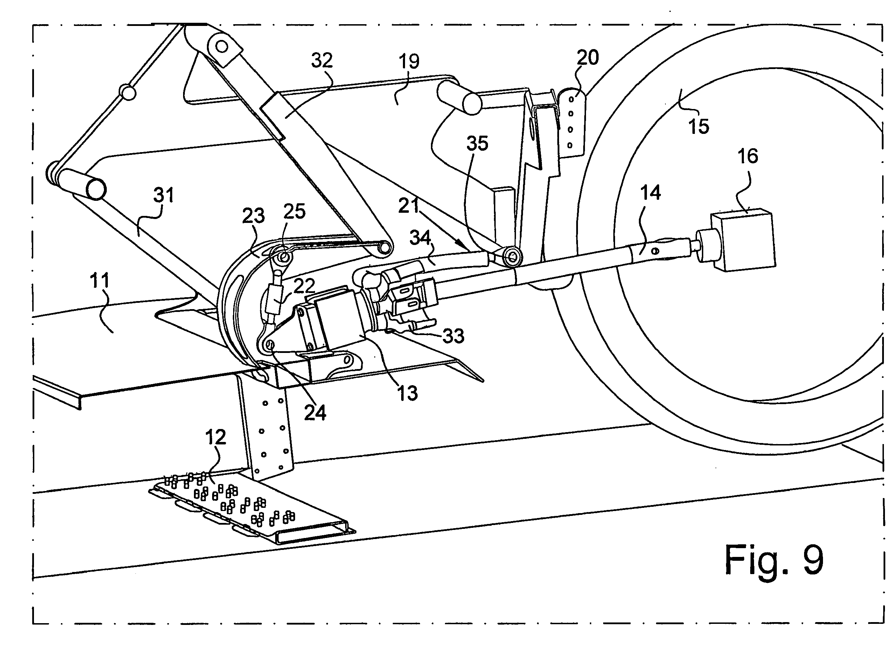

In particular according to the preferred embodiment visible in figures 8 and 9, the angle transmission 13 is not directly connected to the support frame 11, but respectively held up at a moveable support 21, hinged to the upper frame 19 integrally joined to the tractor 15, and hinged to a first end 24 of connecting rod element 22.

Such a connecting rod element 22 also comprises a second end 25 hinged to a portion, generally projecting at its upper part 23, of the support frame 11.

Both the ends 24, 25 of the connecting rod element 22 can rotate around relative horizontal axes orthogonal to the forward motion of the tractor 15.

The moveable support 21 preferably comprises a first front end 33, which is associated to the angle transmission 13, and a rear portion equipped with two arms 34, 34' arranged symmetrically laterally with respect to the cardan shaft 14.

Such arms 34, 34', which prevent lateral movement of the cardan 14, have joints 35, 35' which allow rotations around a horizontal axis orthogonal to the forward motion of the tractor 15 or to the three-point attachment 20 or to a rear portion of the upper frame 19.

The portion projecting at its upper part 23, which is generally a single piece with said support frame 11 and with the mowing bar 12, is C-shaped and comprises a first lower end connected to an upper portion of the support frame 11 and a second upper end hinged to the second end 25 of the connecting rod element 22.

Such a connecting rod element 22, can also be of the type which can extend in a telescopic manner just as the moveable support 21 and the cardan shaft 14 and/or the transverse shaft 17 can also be extended.

In the examples shown in the figures, the moveable connection means 30, 31, 32 of the support frame 11 with the upper frame 19 integrally joined to the tractor 15 can comprise at least one articulated quadrilateral 31, 32 made from two shafts 31, 32 respectively hinged at the top to the upper frame 19 and at the bottom to the support frame 11.

Moreover, a further V-shaped connecting rod element 32 is foreseen, suitable for preventing lateral movements of the group 10, in which the smaller end is hinged to a rear extension of the second upper end of the C-shaped portion 23 whereas the larger end is hinged to the upper frame 19. In order to make the overall weight of the support frame 11 and of the mowing bar 12 lighter, i.e. the weight of the portions suspended from the upper frame 19 which must be suitably reduced so as to not weigh down on the ground to be worked on, excessively, at least one lightening spring element, not shown, is foreseen.

It should be very easy to understand how the improved front mower group for tractors object of the invention operates.

The mower group 10 of the present invention comprises a support frame 11, a mowing bar 12 connected below the support frame 11 and an upper frame 19 connected at the rear to a three-point attachment 20 of the tractor 15. According to the invention the mower group 10 also comprises means 100 for intercepting and conveying the fine dust present in suspension above the support frame 11 and generated during the use of the mower 12, the means 100 of which are arranged laterally to the upper frame 19 in intermediate position between the tractor 15 and the support frame 11.

In particular such means 100 for intercepting and conveying, which form a protective barrier for the suction mouths 60 of the motorisation arranged at the front end of the tractor 15, prevent the aforementioned fine dust of volatile particles present in suspension above the support frame 11 from entering in contact with the air suction vents 60 arranged on the bonnet of the tractor 15 intercepting them and conveying them substantially downwards as schematically indicated with the arrow F in figure 1, or substantially laterally, as schematically indicated with the arrow F1 in figure 2B, or both laterally and downwards, as schematically indicated with the arrows F2 and F3 in figure 5A.

It has thus been seen that an improved front mower group for tractors according to the present invention achieves the aforementioned purposes.

Indeed, advantageously, the present invention prevents fine dust of volatile particles which is in suspension above the mower 12 when the tractor 15 is used, from entering in contact and blocking the air suction vents 60 of the motorisation of the tractor 15 arranged on the bonnet. Consequently, thanks to the present invention the worker no longer has to stop numerous times, as previously necessary, to periodically clean the aforementioned suction mouths 60 of the motorisation of the tractor 15 which are, on the contrary, always kept free and efficient.

The improved front mower group for tractors of the present invention thus conceived may undergo numerous modifications and variants, all covered by the same inventive concept; moreover, all the details can be replaced by technically equivalent elements. In practice the materials used, as well as their sizes, may be any according to the technical needs.

## Claims

1. Front mower group (10) for tractors (15) comprising a support frame (11), a mower (12) connected below said support frame (11), means for transmitting motion coming from a cardan shaft connected to a front power drive of a tractor (15) to said mower (12), said mower group (10) further comprising an upper frame (19) connectable at its rear part to a three-point attachment (20) of said tractor (15), said support frame (11) being connected at its upper part through moveable connection means (30, 31, 32) to said upper frame (19), **characterised in that** said front mower group (10) further comprises means (100) for intercepting and conveying the fine dust present in suspension above said support frame (11) and generated during the use of said mower (12), said means (100) for intercepting and conveying being arranged laterally with respect to said upper frame (19) in intermediate position between said tractor (15) and said support frame (11).

2. Mower group (10) according to claim 1 **characterised in that** said means (100) for intercepting and conveying the fine dust present in suspension above said support frame (11) and generated during the use of said mower (12) comprise two baffle plates (100) shaped in such a manner to intercept and convey downwards the fine dust present in suspension above said support frame (11) generated during the use of said mower (12).

3. Mower group (10) according to claim 1 **characterised in that** said means (100) for intercepting and conveying the fine dust present in suspension above said support frame (11) and generated during the use of said mower (12) comprise two baffle plates (100) shaped in such a manner to intercept and convey laterally the fine dust present in suspension above said support frame (11) generated during the use of said mower (12).

4. Mower group (10) according to claim 1 **characterised in that** said means (100) for intercepting and conveying the fine dust present in suspension above said support frame (11) and generated during the use of said mower (12) comprise two baffle plates (100) shaped in such a manner to intercept and convey both laterally and downwards the fine dust present in suspension above said support frame (11) generated during the use of said mower (12).

5. Mower group (10) according to any one of the previous claims **characterised in that** said baffle plates (100) are constrained to said upper frame (19) in a moveable manner.

6. Mower group (10) according to claim 2 **characterized in that** said baffle plates (100) develop laterally from said upper frame (19) and comprise an upper portion (51) substantially horizontal and parallel to said support frame (11), a lower portion (53) substantially vertical and orthogonal to said support frame (11) and an intermediate connection portion (52) between said upper (51) and lower (53) portions.

7. Mower group (10) according to claim 6 **characterized in that** said portions (51, 52, 53) of said baffle plates (100) are constrained to each other in a moveable manner.

8. Mower group (10) according to claim 3 **characterized in that** said baffle plates (100) develop laterally from said upper frame (19) and comprise an upper portion (51) substantially horizontal and parallel to said support frame (11), a lower portion (53) substantially vertical and orthogonal to said support frame (11), an intermediate connection portion (52) between said upper (51) and lower (53) portions, and lower terminal portions (54) shaped in such a manner to convey also laterally said fine dust.

9. Mower group (10) according to claim 3 **characterized in that** said baffle plates (100) develop laterally from said upper frame (19) and comprise an upper portion (51) substantially horizontal and parallel to said support frame (11), a lower portion (53) substantially vertical and orthogonal to said support frame (11), an intermediate connection portion (52) between said upper (51) and lower (53) portions, and side terminal portions (55) shaped in such a manner to convey substantially laterally said fine dust.

10. Mower group (10) according to claim 1 **characterised in that** said means for transmitting motion coming from a cardan shaft connected to a front power drive of a tractor (15) to said mower (12) comprise an angle transmission (13) of the motion coming from said cardan shaft (14), a transverse shaft (17) connected at an end to said angle transmission (13) and at another end to a lateral transmission case (18) laterally connected to said mower (12).

11. Mower group (10) according to claim 10 **characterised in that** said angle transmission (13) is connected to a moveable support (21) hinged at its rear part to said upper frame (19) and hinged at its front part to a first end (24) of connecting rod element (22), said connecting rod element (22) comprising a second end (25) hinged to a portion projecting at the upper part (23) of said support frame (11), said connecting rod element (22) being of the type that can be extended in a telescopic manner.

12. Mower group (10) according to claim 11 **characterised in that** said moveable support (21) is provided with a first front end (33) associated to said angle transmission (13) and a front portion comprising two arms (34, 34') arranged symmetrically laterally with respect to said cardan shaft (14), said two arms (34, 34') being hinged (35, 35') either to said three-point attachment (20) or to a rear portion of said upper frame (19).

13. Mower group (10) according to claim 11 **characterised in that** said portion projecting at the upper part (23) is C-shaped, wherein a first lower end of said C-shaped portion (23) is connected to an upper portion of said support frame (11) and a second upper end of said C-shaped portion (23) being hinged to said second end (25) of said connecting rod element (22).

14. Mower group (10) according to claim 13 **characterised in that** said moveable connection means (30, 31, 32) of said support frame (11) with said upper frame (19) integrally joined to said tractor (15) comprise an articulated quadrilateral (30, 31) and a further V-shaped connecting rod element (32) wherein the smaller end is hinged to a rear extension of the second upper end of said C-shaped portion (23) and wherein the larger end is hinged to said upper frame (19).

## Patentansprüche

1. Frontmähwerk (10) für Traktoren (15), das einen Tragrahmen (11), einen unterhalb dieses Tragrahmens (11) angeschlossenen Mäher (12) und Mittel zum Übertragen der von einer mit einem Frontkraftantrieb eines Traktors (15) verbundenen Kardanwelle kommenden Bewegung auf diesen Mäher (12) umfasst, wobei dieses Mähwerk (10) ferner einen oberen Rahmen (19) umfasst, der auf seiner Rückseite mit einem Dreipunktanbau (20) dieses Traktors (15) verbunden werden kann, wobei der Tragrahmen (11) auf seiner Oberseite durch bewegliche Verbindungsmittel (30, 31, 32) mit diesem oberen Rahmen (19) verbunden ist, **dadurch gekennzeichnet, dass** das Frontmähwerk (10) ferner Mittel (100) zum Abfangen und Weiterleiten des Feinstaubs umfasst, der sich über dem Tragrahmen (11) in Suspension befindet und während des Gebrauchs des Mähers (12) erzeugt wird, wobei diese Mittel (100) zum Abfangen und Weiterleiten seitlich vom oberen Rahmen (19) in einer Zwischenposition zwischen dem Traktor (15) und dem Tragrahmen (11) angeordnet sind.

2. Mähwerk (10) nach Anspruch 1, **dadurch gekennzeichnet, dass** die Mittel (100) zum Abfangen und Weiterleiten des Feinstaubs, der sich über dem Tragrahmen (11) in Suspension befindet und während des Gebrauchs des Mähers (12) erzeugt wird, zwei Leitbleche (100) umfassen, die so geformt sind, dass sie den über dem Tragrahmen (11) in Suspension befindlichen und während des Gebrauchs des Mähers (12) erzeugten Feinstaub abfangen und abwärts leiten.

3. Mähwerk (10) nach Anspruch 1, **dadurch gekennzeichnet, dass** die Mittel (100) zum Abfangen und Weiterleiten des Feinstaubs, der sich über dem Tragrahmen (11) in Suspension befindet und während des Gebrauchs des Mähers (12) erzeugt wird, zwei Leitbleche (100) umfassen, die so geformt sind, dass sie den über dem Tragrahmen (11) in Suspension befindlichen und während des Gebrauchs des Mähers (12) erzeugten Feinstaub abfangen und seitwärts leiten.

4. Mähwerk (10) nach Anspruch 1, **dadurch gekennzeichnet, dass** die Mittel (100) zum Abfangen und Weiterleiten des Feinstaubs, der sich über dem Tragrahmen (11) in Suspension befindet und während des Gebrauchs des Mähers (12) erzeugt wird, zwei Leitbleche (100) umfassen, die so geformt sind, dass sie den über dem Tragrahmen (11) in Suspension befindlichen und während des Gebrauchs des Mähers (12) erzeugten Feinstaub abfangen und sowohl seitwärts als auch abwärts leiten.

5. Mähwerk (10) nach einem der vorherigen Ansprüche, **dadurch gekennzeichnet, dass** die Leitbleche (100) beweglich am oberen Rahmen (19) angebracht sind.

6. Mähwerk (10) nach Anspruch 2, **dadurch gekennzeichnet, dass** die Leitbleche (100) seitlich vom oberen Rahmen (19) ausgebildet sind und einen im Wesentlichen horizontalen und zum Tragrahmen (11) parallelen oberen Abschnitt (51), einen im Wesentlichen vertikalen und zum Tragrahmen (11) rechtwinkligen unteren Abschnitt (53) und einen Zwischenverbindungsabschnitt (52) zwischen dem oberen (51) und dem unteren Abschnitt (53) umfassen.

7. Mähwerk (10) nach Anspruch 6, **dadurch gekennzeichnet, dass** die Abschnitte (51, 52, 53) der Leitbleche (100) beweglich aneinander angebracht sind.

8. Mähwerk (10) nach Anspruch 3, **dadurch gekennzeichnet, dass** die Leitbleche (100) seitlich vom oberen Rahmen (19) ausgebildet sind und einen im Wesentlichen horizontalen und zum Tragrahmen (11) parallelen oberen Abschnitt (51), einen im Wesentlichen vertikalen und zum Tragrahmen (11) rechtwinkligen unteren Abschnitt (53), einen Zwischenverbindungsabschnitt (52) zwischen dem oberen (51) und dem unteren Abschnitt (53) und untere Endabschnitte (54), die so geformt sind, dass sie den Feinstaub ebenfalls seitwärts leiten, umfassen.

9. Mähwerk (10) nach Anspruch 3, **dadurch gekennzeichnet, dass** die Leitbleche (100) seitlich vom oberen Rahmen (19) ausgebildet sind und einen im Wesentlichen horizontalen und zum Tragrahmen (11) parallelen oberen Abschnitt (51), einen im Wesentlichen vertikalen und zum Tragrahmen (11) rechtwinkligen unteren Abschnitt (53), einen Zwischenverbindungsabschnitt (52) zwischen dem oberen (51) und dem unteren Abschnitt (53) und seitliche Endabschnitte (55), die so geformt sind, dass sie den Feinstaub im Wesentlichen seitwärts leiten, umfassen.

10. Mähwerk (10) nach Anspruch 1, **dadurch gekennzeichnet, dass** die Mittel zum Übertragen der von einer mit einem Frontkraftantrieb eines Traktors (15) verbundenen Kardanwelle kommenden Bewegung auf den Mäher (12) ein Winkelgetriebe (13) für die von der Kardanwelle (14) kommende Bewegung und eine Querwelle (17) umfassen, die an einem Ende an dieses Winkelgetriebe (13) und an einem anderen Ende an ein seitliches Getriebegehäuse (18) angeschlossen ist, das seitlich mit dem Mäher (12) verbunden ist.

11. Mähwerk (10) nach Anspruch 10, **dadurch gekennzeichnet, dass** das Winkelgetriebe (13) mit einem beweglichen Lager (21) verbunden ist, das auf seiner Rückseite an den oberen Rahmen (19) angelenkt ist und das auf seiner Vorderseite an ein erstes Ende (24) eines Verbindungsstangenelements (22) angelenkt ist, wobei dieses Verbindungsstangenelement (22) ein zweites Ende (25) umfasst, das an einen auf der Oberseite (23) des Tragrahmens (11) überstehenden Teil angelenkt ist, wobei dieses Verbindungsstangenelement (22) des Typs ist, der teleskopisch verlängert werden kann.

12. Mähwerk (10) nach Anspruch 11, **dadurch gekennzeichnet, dass** das bewegliche Lager (21) mit einem ersten vorderen Ende (33) versehen ist, das mit dem Winkelgetriebe (13) und einem vorderen Teil verbunden ist, der zwei Arme (34, 34') umfasst, die symmetrisch seitlich von der Kardanwelle (14) angeordnet sind, wobei diese zwei Arme (34, 34') entweder an den Dreipunktanbau (20) oder an einen hinteren Teil des oberen Rahmens (19) angelenkt (35, 35') sind.

13. Mähwerk (10) nach Anspruch 11, **dadurch gekennzeichnet, dass** der auf der Oberseite überstehende Teil (23) C-förmig ist, wobei ein erstes unteres Ende dieses C-förmigen Teils (23) mit einem oberen Abschnitt des Tragrahmens (11) verbunden ist und ein zweites oberes Ende dieses C-förmigen Teils (23) an das zweite Ende (25) des Verbindungsstangenelements (22) angelenkt ist.

14. Mähwerk (10) nach Anspruch 13, **dadurch gekennzeichnet, dass** die beweglichen Verbindungsmittel (30, 31, 32) des Tragrahmens (11) mit dem integral mit dem Traktor (15) verbundenen oberen Rahmen (19) ein gelenkiges Viereck (30, 31) und ein weiteres V-förmiges Verbindungsstangenelement (32) umfassen, wobei das schmalere Ende an eine rückseitige Verlängerung des zweiten oberen Endes des C-förmigen Teils (23) angelenkt ist und das breitere Ende an den oberen Rahmen (19) angelenkt ist.

## Revendications

1. Faucheuse frontale (10) pour tracteurs (15) comprenant un cadre de support (11), une faucheuse (12) reliée en dessous dudit cadre de support (11), des moyens pour transmettre un mouvement provenant d'un arbre à cardan relié à une commande mécanique avant d'un tracteur (15) à ladite faucheuse (12), ladite faucheuse (10) comprenant en outre un cadre supérieur (19) pouvant être relié en correspondance de sa partie arrière à un attelage trois points (20) dudit tracteur (15), ledit cadre de support (11) étant relié en correspondance de sa partie supérieure à travers des moyens de raccordement mobiles (30, 31, 32) audit cadre supérieur (19), **caractérisée en ce que** ladite faucheuse frontale (10) comprend en outre des moyens (100) d'interception et de transport de la poussière fine présente en suspension au-dessus dudit cadre de support (11) et générée pendant l'utilisation de ladite faucheuse (12), lesdits moyens (100) d'interception et de transport étant disposés latéralement par rapport audit cadre supérieur (19) en position intermédiaire entre ledit tracteur (15) et ledit cadre de support (11).

2. Faucheuse (10) selon la revendication 1 **caractérisée en ce que** lesdits moyens (100) d'interception et de transport de la poussière fine présente en suspension au-dessus dudit cadre de support (11) et générée pendant l'utilisation de ladite faucheuse (12) comprennent deux chicanes (100) formées de telle manière à intercepter et transporter vers le bas la poussière fine présente en suspension au-dessus dudit cadre de support (11) générée pendant l'utilisation de ladite faucheuse (12).

3. Faucheuse (10) selon la revendication 1 **caractérisée en ce que** lesdits moyens (100) d'interception et de transport de la poussière fine présente en suspension au-dessus dudit cadre de support (11) et générée pendant l'utilisation de ladite faucheuse (12) comprennent deux chicanes (100) formées de telle manière à intercepter et transporter latéralement la poussière fine présente en suspension au-dessus dudit cadre de support (11) générée pendant l'utilisation de ladite faucheuse (12).

4. Faucheuse (10) selon la revendication 1 **caractérisée en ce que** lesdits moyens (100) d'interception et de transport de la poussière fine présente en suspension au-dessus dudit cadre de support (11) et générée pendant l'utilisation de ladite faucheuse (12) comprennent deux chicanes (100) formées de telle manière à intercepter et transporter tant latéralement que vers le bas la poussière fine présente en suspension au-dessus dudit cadre de support (11) générée pendant l'utilisation de ladite faucheuse (12).

5. Faucheuse (10) selon une quelconque des revendications précédentes, **caractérisée en ce que** lesdites chicanes (100) sont retenues audit cadre supérieur (19) de manière mobile.

6. Faucheuse (10) selon la revendication 2 **caractérisée en ce que** lesdites chicanes (100) se développent latéralement à partir dudit cadre supérieur (19) et comprennent une partie supérieure (51) substantiellement horizontale et parallèle audit cadre de support (11), une partie inférieure (53) substantiellement verticale et orthogonale audit cadre de support (11) et une partie de raccordement intermédiaire (52) entre lesdites parties supérieure (51) et inférieure (53).

7. Faucheuse (10) selon la revendication 6 **caractérisée en ce que** lesdites parties (51, 52, 53) desdites chicanes (100) sont retenues l'une à l'autre de manière mobile.

8. Faucheuse (10) selon la revendication 3 **caractérisée en ce que** lesdites chicanes (100) se développent latéralement à partir dudit cadre supérieur (19) et comprennent une partie supérieure (51) substantiellement horizontale et parallèle audit cadre de support (11), une partie inférieure (53) substantiellement verticale et orthogonale audit cadre de support (11), une partie de raccordement intermédiaire (52) entre lesdites parties supérieure (51) et inférieure (53), et des parties terminales inférieures (54) formées de telle manière à transporter également latéralement ladite poussière fine.

9. Faucheuse (10) selon la revendication 3 **caractérisée en ce que** lesdites chicanes (100) se développent latéralement à partir dudit cadre supérieur (19) et comprennent une partie supérieure (51) substantiellement horizontale et parallèle audit cadre de support (11), une partie inférieure (53) substantiellement verticale et orthogonale audit cadre de support (11), une partie de raccordement intermédiaire (52) entre lesdites parties supérieure (51) et inférieure (53), et des parties terminales latérales (55) formées de telle manière à transporter substantiellement latéralement ladite poussière fine.

10. Faucheuse (10) selon la revendication 1 **caractérisée en ce que** lesdits moyens pour transmettre un mouvement provenant d'un arbre à cardan relié à une commande mécanique avant d'un tracteur (15) à ladite faucheuse (12) comprennent un renvoi d'angle (13) du mouvement provenant dudit arbre à cardan (14), un arbre transversal (17) relié en correspondance d'une extrémité audit renvoi d'angle (13) et en correspondance d'une autre extrémité à un boîtier de transmission latéral (18) relié latéralement à ladite faucheuse (12).

11. Faucheuse (10) selon la revendication 10 **caractérisée en ce que** ledit renvoi d'angle (13) est relié à un support mobile (21) articulé en correspondance de sa partie arrière audit cadre supérieur (19) et articulé en correspondance de sa partie avant à une première extrémité (24) d'un élément de bielle (22), ledit élément de bielle (22) comprenant une seconde extrémité (25) articulée à une partie en saillie en correspondance de la partie supérieure (23) dudit cadre de support (11), ledit élément de bielle (22) étant du type qui peut s'étirer de manière télescopique.

12. Faucheuse (10) selon la revendication 11 **caractérisée en ce que** ledit support mobile (21) est pourvu d'une première extrémité avant (33) associée audit renvoi d'angle (13) et d'une partie avant comprenant deux bras (34, 34') disposés symétriquement latéralement par rapport audit arbre à cardan (14), lesdits deux bras (34, 34') étant articulés (35, 35') soit audit attelage trois points (20), soit à une partie arrière dudit cadre supérieur (19).

13. Faucheuse (10) selon la revendication 11 **caractérisée en ce que** ladite partie en saillie en correspondance de la partie supérieure (23) est en forme de C, où une première extrémité inférieure de ladite partie en forme de C (23) est reliée à une partie supérieure dudit cadre de support (11) et une seconde extrémité supérieure de ladite partie en forme de C (23) étant articulée à ladite seconde extrémité (25) dudit élément de bielle (22).

14. Faucheuse (10) selon la revendication 13 **caractérisée en ce que** lesdits moyens de raccordement mobiles (30, 31, 32) dudit cadre de support (11) avec ledit cadre supérieur (19) joint intégralement audit tracteur (15) comprennent un quadrilatère articulé (30, 31) et un ultérieur élément de bielle en forme de V (32) où l'extrémité plus petite est articulée à une extension arrière de la seconde extrémité supérieure de ladite partie en forme de C (23) et où l'extrémité plus grande est articulée audit cadre supérieur (19).
